# EUROPEAN PATENT SPECIFICATION

(11) **EP 2 894 208 B1**
(45) Date of publication and mention of the grant of the patent: **12.02.2020**
(21) Application number: 13797481.2
(22) Date of filing: 28.06.2013
(51) Int. Cl.: F16D 69/02

(54) **FRICTION MATERIAL**
REIBUNGSMATERIAL
MATÉRIAU DE FRICTION

(30) Priority: 29.05.2012 JP 2012122046
(43) Date of publication of application: 15.07.2015
(73) Proprietor: Nisshinbo Brake Inc., Chuo-ku Tokyo 103-8650 (JP)
(72) Inventor: HATTORI Yasuki, Oira-gun Gunma 370-0614 (JP); TAKADA Toshiya, Oura-gun Gunma 370-0614 (JP); YAGUCHI Mitsuaki, Oura-gun Gunma 370-0614 (JP)
(74) Representative: Flügel Preissner Schober Seidel
(86) International application number: PCT/JP2013/067894
(87) International publication number: WO 2013/180315

(56) References cited:
- EP-A1- 0 699 728
- CN-A- 101 792 654
- JP-A- H04 372 687
- JP-A- H07 102 245
- JP-A- 2003 113 368
- JP-A- 2006 257 113
- JP-A- 2007 254 621
- JP-A- 2012 197 352
- JP-A- 2012 255 052
- JP-A- 2013 067 753
- KR-A- 20100 127 968
- GABRIELA Z BOSSHARD ET AL: "Optical properties of polydisperse submicrometer aggregates of sulfur-containing zinc oxide consisting of spherical nanocrystallites", 902 NEW J. CHEM. NEW J. CHEM, vol. 35, no. 35, 23 February 2011 (2011-02-23), pages 902-908, XP055273509, DOI: 10.1039/c0nj00914h

## Description

### [Field of the Invention]

This invention relates to a friction material which is used for a disc brake pad and a brake shoe of an automobile or the like.

### [Background Technology]

Conventionally, a disc brake device and/or a drum brake device are used as the brake device of the automobile, and a disc brake pad and/or a brake shoe both of which are made by fixing the friction material on a metal base member such as steel are used as a friction member of the brake device.

The friction material is classified into a semi-metallic friction material containing, as a fiber base, 30 weight % or more but less than 60 weight % of a steel fiber relative to the total amount of the friction material composition, a low steel friction material containing, as a part of the fiber base, less than 30 weight % of the steel fiber relative to the total amount of the friction material composition, and Non-Asbestos-Organic (NAO) friction material not containing a steel-based fiber such as the steel fiber and a stainless steel fiber.

The friction material generating less braking noise is demanded of late years, it is a recent trend to use the friction member that uses the NAO friction material that does not contain the steel fiber and steel-based fiber but mainly contains a fiber base such as a non-ferrous metal fiber, an organic fiber, and an inorganic fiber, a binder such as a thermosetting resin, an organic filler, an inorganic filler, an inorganic abrasive material, a lubricant, and a friction modifier such as metallic particles.

Also, because of the environmental consciousness, the friction material that does not contain copper, which is one of heavy metals, has been on demand, and the development of the NAO friction material that does not contain copper component such as a metal copper, a copper alloy, and a copper compound, has been started.

The Patent Document 1 (US Provisional Patent Publication No. 2010/0084233) discloses the friction material for an automobile brake that contains 12 - 24 volume % of the binder, 2 - 10 volume % of the fiber, 5 volume % or less of at least one type of lubricant, 15 - 30 volume % of at least one type of abrasive material, 10 - 24 volume % of at least one type of titanate and essentially does not contain copper and asbestos, i.e., the NAO friction material that does not contain a copper component.

In the NAO friction material, the copper component, especially a copper fiber and/or a copper particle, have been added as a necessary component to satisfy the required performance, but it became more obvious that removing the copper fiber and copper particle from the NAO friction material causes various problems that did not exist before.

One of the problems is an occurrence of the metal catch. The metal catch occurs when the abrasion dust of the counter member of the friction material that is generated when the friction material frictionally slides on the counter member such as the disc rotor and brake drum made of cast iron, transfer to adhere to the metal component existing on the sliding surface of the friction material to form metal lump, and the metal lump is pushed into and affixed in the internal portion of the sliding surface of the friction material.

When the metal catch occurs, the metal lump inside the friction material significantly grinds the counter member to cause vibration when braking and the life span of the friction material is shortened because of abnormal wear of the friction material due to the grinded counter member.

Conventional friction material that contains a copper fiber and a copper particle, to suppress the metal catch, contains a metal, i. e. a metal simple substance except copper and an alloy that are softer than the counter member and/or the metal sulfide having lubricity.

The Patent Document 2 (Japanese Provisional Patent Publication No. 2002-226834) discloses non-asbestos friction material characterized in manufacturing by forming and curing the non-asbestos friction material composition mainly including a fiber base, filler, and a binder as the frictional material component, and further including tin and/or tin sulfide as the friction material component.

The Patent Document 3 (Japanese Provisional Patent Publication No. 2004-35281) discloses the friction material characterized in manufacturing by forming and curing the non-asbestos friction material composition mainly including fiber base, filler, and binder as the friction material component, and further including 5.5 - 17.5 volume % of at least three materials that are selected from tin, tin alloy and tin compound and have different melting points. Patent Document 4 relates to an environment-friendly break friction material composition containing 16-36wt% of lubricant, 8-22wt% of binder, 7-15wt% of reinforced fiber, 8-15wt% of abrasive, and 38∼61wt% of filler. The lubricant includes 3∼7wt% of natural graphite, 2∼5wt% of artificial graphite, 3-6wt% of graphite fiber, 4-7wt% of tin sulfide, 2-5wt% of zinc sulfide, and 2-6wt% of iron sulfide. Patent document 5 relates to a friction material comprising a fibrous base material, a binder and a filler, the friction material comprising >=0.05 vol.% and <0.45 vol.% of at least zinc sulfide (ZnS) as the filler.

However, in the NAO friction material that does not contain a copper fiber and a copper particle, it became obvious that the metal catch occurs more when the metal simple substances, alloys, and/or some metal sulfides that have been known to suppress the metal catch are added.

### [Prior Art]

### [Patent Documents]

[Patent Document 1] US Provisional Patent Publication No. 2010/0084233
[Patent Document 2] Japanese Provisional Patent Publication No. 2002-226834
[Patent Document 3] Japanese Provisional Patent Publication No. 2004-35281
[Patent Document 4] KR 2010 127 968 A
[Patent Document 5] JP 2006-257113 A

### [Summary of Invention]

### [Problems to be Resolved by the Invention]

An object of this invention is to provide the friction material that suppresses the metal catch while securing the sufficient wear resistance in the NAO friction material that does not contain a copper component.

### [Means to Resolve]

The invention is defined by the appended claims. For the NAO friction material that contains a copper fiber and/or a copper particle as the copper component, the following structural reason is expected to lead to suppress the metal catch when adding the metal simple substance, alloy and/or metal sulfide thereto.

### [Adding Metal Simple Substance and/or Alloy]

If a fiber and/or a particle made of a metal simple substance such as tin, and/or an alloy such as brass, are added to the NAO friction material that contains the copper fiber and/or copper particle as the copper component, first, the transferred adhesion layer of metal simple substance and/or alloy is formed on the sliding surface of the counter member by sliding of the friction material and the counter member.

The metal simple substance and/or alloy of the transferred adhesion layer is transferred to adhere to the copper component of the friction material, thereby inhibiting the occurrence of transferring to adhere the abrasion dust of the counter member to the copper component of the friction material.
The metal simple substance and/or alloy which is transferred and adhere to the copper component of the friction material does not develop the metal lump because of the softness thereof, thereby suppressing the occurrence of the metal catch.

### [Adding Metal Sulfide]

If the metal sulfide is added to the NAO friction material that contains the copper fiber and/or copper particle as the copper component, the lubricating effect of the metal sulfide suppresses the generation of the abrasion dust and at the same time suppresses the metal catch.

In the NAO friction material that does not contain copper component, if the metal simple substance, alloy, and/or metal sulfide is added thereto, the following structural reason is expected to cause the occurrence of the metal catch.

### [Adding Metal Simple Substance and/or Alloy]

If the fiber and/or particle of metal simple substance such as tin, and/or an alloy such as brass, is added to the NAO friction material that does not contain copper fibers and copper particles as the copper component, the abrasion dust of the counter member is transferred to adhere to the metal simple substance and/or alloy which exists on the sliding surface of the friction material to form the metal lump, thereby occurring the metal catch.

### [Adding Metal Sulfide]

If the metal sulfide is added to the NAO friction material that does not contain the copper fibers and copper particles as the copper component, the generation of the abrasion dust of the counter member is suppressed within the relatively lower temperature range because of the lubricating effect of the metal sulfide, thereby suppressing the metal catch. However, removing the copper which has high thermal conductivity from the friction material reduces the heat dissipation of the friction material and the friction material keeps the heat if the friction material is exposed under high temperature and high load condition, thereby tending to reach the decomposition temperature of the metal sulfide. When the metal sulfide is decomposed into the metal component and the sulfide component, the abrasion dust of the counter member is transferred to adhere to the decomposed metal component to form the metal lump, thereby causing the metal catch. However, some metal sulfides with relatively higher decomposition temperature do not cause occurrence of the metal catch.

The inventors of this invention surprisingly found out that to suppress the occurrence of the metal catch in the NAO friction material that does not contain the copper fiber and copper particle as the copper component, removing the material conventionally considered to suppress the metal catch was the most effective way of suppressing the metal catch.

This invention relates to a friction material, which is manufactured by forming a NAO friction material composition that does not contain a copper component, metal and alloys and contains the predetermined particular amount of the metal sulfide as the lubricant, and is based on the following technology.

According to the invention, the friction material is manufactured by forming a NAO friction material composition that neither contains any copper component, nor a metal, nor an alloy, wherein said friction material composition contains 1.0 - 2.0 weight % of zinc sulfide as a lubricant relative to the total amount of the friction material composition but does not contain tin disulfide.

It is also advantageous that the friction material composition further contains, as lubricant, 2.0 - 5.0 weight % of graphite relative to the total amount of the friction material composition.

### [Advantage of the Invention]

This invention can provide, for the NAO friction material that does not contain a copper component, the friction material that can suppress the occurrence of the metal catch while securing sufficient wear resistance.

### [Brief Explanation of the Drawings]

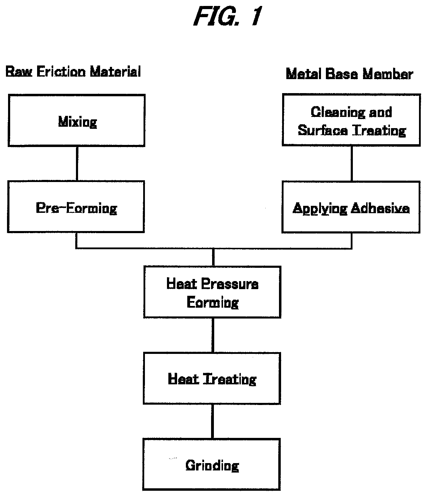

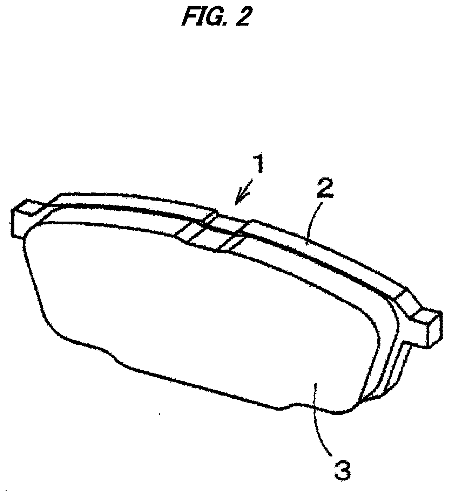

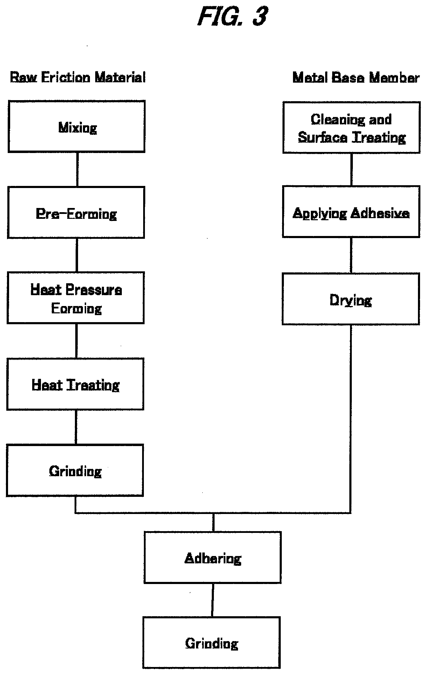

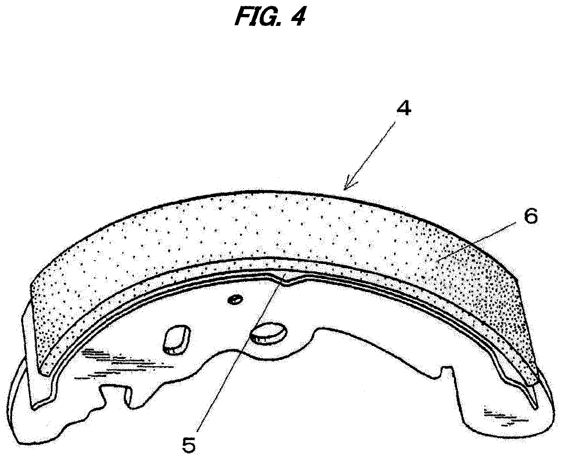

FIG. 1 is a view showing an example of the manufacturing process of the disc brake pad employing the friction material of this invention; FIG. 2 is a perspective view of one example of the disc brake pad employing the friction material of this invention; FIG. 3 is a view showing an example of the manufacturing process of the brake shoe employing the friction material of this invention; and FIG. 4 is a perspective view of one example of the brake shoe employing the friction material of this invention.

### [Embodiment of the Invention]

The friction material is manufactured by forming the NAO friction material composition that neither contains any copper component, nor a metal, nor an alloy, wherein said friction material composition contains 1.0 - 2.0 weight % of zinc sulfide as a lubricant relative to the total amount of the friction material composition, but does not contain tin disulfide.

If the amount of the added zinc sulfide is within the above-range, the wear resistance of the friction material becomes more preferable and sufficient braking force is obtained without reducing the frictional coefficient.

Zinc sulfide has an oxidation temperature of about 700 centigrade and can maintain the lubricating effect within the temperature range.

Further adding 2.0 - 5.0 weight % of the graphite relative to the total amount of the friction material composition as lubricant further improves the wear resistance.

Also, the friction material composition according to this invention contains, in addition to the lubricant of the zinc sulfide and/or the graphite, the fiber base such as organic fiber and inorganic fiber, the binder such as the thermosetting resin, and the friction modifier such as organic filler, inorganic filler and the abrasive material.

As the fiber base, an organic fiber such as an aramid fiber and an acrylic fiber and an inorganic fiber such as a carbon fiber, a ceramic fiber, and a rock wool can be used, where one or two or more combinations of these fibers can be used. The amount of the fiber base contained in the friction material composition is preferably 3 - 10 weight % relative to the total amount of the friction material composition in order to secure the sufficient mechanical strength.

As the binder, the thermosetting resin such as phenolic resin and epoxy resin, the resin obtained as a result of modifying above thermosetting resin with such as cashew oil, silicone oil, and various elastomer, the resin obtained as a result of dispersing such as the various elastomer and fluoropolymer to above thermosetting resin can be used, where one or two or more combinations of these binders can be used.

The amount of the binder is preferably 4 - 15 weight % relative to the total amount of the friction material composition in order to secure the sufficient mechanical strength and the wear resistance.

As the friction modifier, an organic filler such as cashew dust, rubber dust (pulverized powder of tire tread rubber), and various unvulcanized rubber powder and vulcanized rubber powder, an inorganic filler such as barium sulfate, calcium carbonate, calcium hydroxide, vermiculite, mica, platelet or flake-like titanate, and magnetite, and the abrasive material such as silica, aluminum oxide, zirconium oxide, zirconium silicate, and magnesium oxide can be used, where one or more of combination of these friction modifiers can be used.

The amount of the friction modifier is preferably 65 - 90 weight % relative to the total amount of the friction material composition in consideration of the desirable frictional characteristics.

The friction material of this invention is manufactures through the process of a mixing step of uniformly mixing the prescribed amount of above friction material composition using the mixer, a heat pressure forming step of heat pressure forming the above-obtained raw friction material mixture set in the heat forming die to obtain the heat pressure forming article, a heat processing step of heating the obtained heat pressure forming article to complete the curing of the binder, and a grinding step of making the frictional surface.

As desired, prior to the heat pressure forming step, a granulating step of granulating the raw friction material mixture, a pre-forming step of pressure forming the raw friction material mixture set in the pre-forming die in advance or the granulated substance obtained through the granulating step in the pre-forming die in advance, and a coating step, a baking finish step following to the coating step, and scorching step may be performed after the heat pressure forming step.

When manufacturing the disc brake pad, in the earliest stage of the heat pressure forming step, a back plate made of metal such as steel and the above friction material mixture, granulating substance or pre-forming article are superposed. The back plate is cleaned, surface treated, and adhesive applied in advance.

### [Embodiment]

In the following sections, embodiments and comparative examples are shown to concretely explain this invention, but this invention is not limited to the embodiments described herein.

### [Manufacturing Method of Friction Material According to Embodiments 3, 4, and 8 - 11; and Comparative Examples 1-6, and 2A]

The friction material composition with the contents shown in the TABLE 1 and TABLE 2 are mixed with the Loedige Mixer for 5 minutes and pressed in the pre-forming die at 10MPa for 1 minute to obtain the preformed article. The obtained preformed article is superposed on the back plate which is cleaned, surface treated, and applied adhesive thereon in advance, and then heat pressure forming in the heat forming die at 40MPa at 150 centigrade for 10 minutes, heat treated (postcured) at 200 centigrade for 5 hours, and grinded to produce the brake pad for automobile (according to the Embodiments 3, 4, and 8 - 11; and Comparative Examples 1-6, and 2A).

The existence of metal catch, aggressiveness against the counter member, wear resistance, and frictional coefficient were evaluated for the obtained substance according to the respective embodiments and comparative examples. The evaluating method is as follows and the result of the evaluation is shown in TABLE 1 and TABLE 2.

### <Existence of Metal Catch>

In the wear test, when measuring the frictional wear amount at the respective temperature, the metal catch was visually observed and is evaluated based on the following standard.
○: no metal catch
×: metal catch

### <Aggressiveness against the Counter Member>

According to the "Wear Test Procedure on Inertia Dynamometer" of the JASO C427, under the condition of the initial speed of braking at 50 km/h, braking deceleration at 0.3G, appropriate braking frequency, brake temperature before braking operation at 100 centigrade, 200 centigrade, 300 centigrade, and 400 centigrade, the abrasion amount (µm) of the disc rotor was measured and the braking frequency at 1000 cycle was measured to evaluate based on the following standard.
⊚: Abrasion amount of the disc rotor (µm) < 15
○: 15≦ abrasion amount of the disc rotor (µm) < 20
Δ: 20≦ abrasion amount of the disc rotor (µm) < 25
×: 25≦ abrasion amount of the disc rotor (µm)

### <Wear Resistance>

According to the "Wear Test Procedure on Inertia Dynamometer" of the JASO C427, under the condition of the initial speed of braking at 50 km/h, braking deceleration at 0.3G, appropriate braking frequency, brake temperature before braking operation at 100 centigrade, 200 centigrade, 300 centigrade, and 400 centigrade, the wear amount (mm) of the friction material was measured and the braking frequency at 1000 cycle was measured to evaluate based on the following standard.
⊚: Wear amount of the disc pad (mm) < 0.15
○: 0.15≦ Wear amount of the disc pad (mm) < 0.20
Δ: 0.20≦ Wear amount of the disc pad (mm) < 0.25
×: Wear amount of the disc pad (mm) ≧ 0.25

### <Average Frictional Coefficient>

According to the "Second Effect Test" of the JASO C406, performing 5 times of the braking test under 4MPa of hydraulic pressure at the initial speed of braking at 50km/h to determine the average value.
⊚: 0.42 or more but less than 0.45
○: 0.39 or more but less than 042
Δ: 0.36 or more but less than 0.39
×: less than 0.36

**[TABLE 1]**

| | | CE1 | CE2 | EB3 | EB4 | CE2A | CE3 | CE4 |
|---|---|---|---|---|---|---|---|---|
| Fiber Base | Aramid Fiber | 2 | 2 | 2 | 2 | 2 | 2 | 2 |
| | Biosoluble Rock Wool | 3 | 3 | 3 | 3 | 3 | 3 | 3 |
| Binder | Phenolic Resin | 6 | 6 | 6 | 6 | 6 | 6 | 6 |
| Lubricant | Zinc Sulfide (ZnS) | 0.2 | 0.5 | 1 | 2 | 3 | 0 | 0 |
| | Molybdenum Disulfide (MoS₂) | 0 | 0 | 0 | 0 | 0 | 1 | 0 |
| | Tungsten Disulfide (WS₂) | 0 | 0 | 0 | 0 | 0 | 0 | 1 |
| | Tin Disulfide (SnS₂) | 0 | 0 | 0 | 0 | 0 | 0 | 0 |
| | Tin Particle | 0 | 0 | 0 | 0 | 0 | 0 | 0 |
| | Graphite | 4 | 4 | 4 | 4 | 4 | 4 | 4 |
| Abrasive Material | Zirconium Silicate | 2 | 2 | 2 | 2 | 2 | 2 | 2 |
| | Zirconium Oxide | 22 | 22 | 22 | 22 | 22 | 22 | 22 |
| Organic Filler | Cashew Dust | 5 | 5 | 5 | 5 | 5 | 5 | 5 |
| | Pulverized Powder of Tire Tread Rubber | 2 | 2 | 2 | 2 | 2 | 2 | 2 |
| Inorganic Filler | Mica | 3 | 3 | 3 | 3 | 3 | 3 | 3 |
| | Vermiculite | 2 | 2 | 2 | 2 | 2 | 2 | 2 |
| | Magnetite | 3 | 3 | 3 | 3 | 3 | 3 | 3 |
| | Platelet Potassium Hexatitanate | 20 | 20 | 20 | 20 | 20 | 20 | 20 |
| | Calcium Hydroxide | 2 | 2 | 2 | 2 | 2 | 2 | 2 |
| | Barium Sulfate | 23.8 | 23.5 | 23 | 22 | 21 | 23 | 23 |
| Total | | 100 | 100 | 100 | 100 | 100 | 100 | 100 |
| Evaluation | Metal Catch | ○ | ○ | ○ | ○ | ○ | ○ | ○ |
| | Aggressiveness against Counter Member | ⊚ | ⊚ | ⊚ | ⊚ | ⊚ | ○ | ○ |
| | Wear Resistance | Δ | ○ | ⊚ | ⊚ | ⊚ | ○ | ○ |
| | Frictional Coefficient | ⊚ | ⊚ | ⊚ | ○ | Δ | ⊚ | ⊚ |

| | | | | | | | | |
|---|---|---|---|---|---|---|---|---|
| EB = Embodiment CE = Comparative Example | | | | | | | | |

**[TABLE 2]**

| | | EB8 | EB9 | EB10 | EB11 | CE5 | CE6 |
|---|---|---|---|---|---|---|---|
| Fiber Base | Aramid Fiber | 2 | 2 | 2 | 2 | 2 | 2 |
| | Biosoluble Rock Wool | 3 | 3 | 3 | 3 | 3 | 3 |
| Binder | Phenolic Resin | 6 | 6 | 6 | 6 | 6 | 6 |
| Lubricant | Zinc Sulfide (ZnS) | 1 | 1 | 1 | 1 | 0 | 0 |
| | Molybdenum Disulfide (MoS₂) | 0 | 0 | 0 | 0 | 0 | 0 |
| | Tungsten Disulfide (WS₂) | 0 | 0 | 0 | 0 | 0 | 0 |
| | Tin Disulfide (SnS₂) | 0 | 0 | 0 | 0 | 1 | 0 |
| | Tin Particle | 0 | 0 | 0 | 0 | 0 | 1 |
| | Graphite | 1 | 2 | 5 | 6 | 4 | 4 |
| Abrasive Material | Zirconium Silicate | 2 | 2 | 2 | 2 | 2 | 2 |
| | Zirconium Oxide | 22 | 22 | 22 | 22 | 22 | 22 |
| Organic Filler | Cashew Dust | 5 | 5 | 5 | 5 | 5 | 5 |
| | Pulverized Powder of Tire Tread Rubber | 2 | 2 | 2 | 2 | 2 | 2 |
| Inorganic Filler | Mica | 3 | 3 | 3 | 3 | 3 | 3 |
| | Vermiculite | 2 | 2 | 2 | 2 | 2 | 2 |
| | Magnetite | 3 | 3 | 3 | 3 | 3 | 3 |
| | Platelet Potassium Hexatitanate | 20 | 20 | 20 | 20 | 20 | 20 |
| | Calcium Hydroxide | 2 | 2 | 2 | 2 | 2 | 2 |
| | Barium Sulfate | 26 | 25 | 22 | 21 | 23 | 23 |
| Total | | 100 | 100 | 100 | 100 | 100 | 100 |
| Evaluation | Metal Catch | ○ | ○ | ○ | ○ | × | × |
| | Aggressiveness against Counter Member | ○ | ○ | ⊚ | ⊚ | Δ | × |
| | Wear Resistance | Δ | ○ | ⊚ | ⊚ | Δ | × |
| | Frictional Coefficient | ⊚ | ⊚ | ○ | Δ | ⊚ | ⊚ |

According to TABLE 1 and TABLE 2, in the NAO friction material that does not contain copper component, it was found that containing the zinc sulfide to be decomposed into the metal and sulfur as the lubricant suppress the occurrence of the metal catch and at the same time the required performance for the friction material such as aggressiveness against the counter member, wear resistance, and frictional coefficient can be sufficiently secured.

### [Industrial Applicability]

In recent year, a friction material that generates less brake noise and does not contain copper, which is the heavy metal, is required, and according to this invention, the friction material that can suppress the occurrence of the metal catch while securing sufficient wear resistance can be obtained, therefore, the friction material of the present invention has an excellent practical value.

### [Explanation of the Reference No]

- 1.: Disc Brake Pad
- 2.: Back Plate
- 3.: Friction Material
- 4.: Brake Shoe
- 5.: Brake Shoe Body
- 6.: Friction Material (Lining)

## Claims

1. A friction material that is manufactured by forming a NAO friction material composition that neither contains any copper component nor a metal nor an alloy, wherein
said friction material composition contains 1.0 - 2.0 weight % of zinc sulfide as a lubricant relative to the total amount of the friction material composition but does not contain tin disulfide.

2. The friction material according to Claim 1, wherein
the friction material composition contains, as lubricant, 2.0 - 5.0 weight % of graphite relative to the total amount of the friction material composition.

## Patentansprüche

1. Reibungsmaterial, das durch Bildung einer asbestfreien, organischen (NAO) Reibungsmaterialzusammensetzung, welche weder einen Kupferbestandteil, noch ein Metall, noch eine Legierung enthält, hergestellt ist, wobei die Reibungsmaterialzusammensetzung als Schmiermittel 1,0 - 2,0 Gewichtsprozent Zinksulfid enthält, bezogen auf die Gesamtmenge der Reibungsmaterialzusammensetzung, jedoch kein Zinndisulfid enthält.

2. Das Reibungsmaterial nach Anspruch 1, wobei die Reibungsmaterialzusammensetzung als Schmiermittel 2,0 - 5,0 Gewichtsprozent Graphit enthält, bezogen auf die Gesamtmenge der Reibungsmaterialzusammensetzung.

## Revendications

1. Matériau de friction qui est fabriqué en formant une composition de matériau de friction organique sans amiante (NAO) qui ne contient ni composant à base de cuivre, ni métal, ni alliage, dans lequel
ladite composition de matériau de friction contient 1,0 à 2,0 % en poids de sulfure de zinc à titre de lubrifiant par rapport à la quantité totale de la composition de matériau de friction mais ne contient pas de disulfure d'étain.

2. Matériau de friction selon la revendication 1, dans lequel
la composition de matériau de friction contient, à titre de lubrifiant, 2,0 à 5,0 % en poids de graphite par rapport à la quantité totale de la composition de matériau de friction.
